# EUROPEAN PATENT APPLICATION

(11) **EP 2 076 006 A1**
(43) Date of publication of application: **01.07.2009**
(21) Application number: 08172382.7
(22) Date of filing: 19.12.2008
(51) Int. Cl.: H04N 1/00, G06F 17/30

(54) **Viewer method and viewer device**

(30) Priority: 28.12.2007 JP 2007340777
(71) Applicant: Noritsu Koki Co., Ltd, Wakayama-shi, Wakayama 640-8550 (JP)
(72) Inventor: Nakano, Tomoo, Wakayama 640-8550 (JP); Miyawaki, Hisashi, Wakayama 640-8550 (JP)
(74) Representative: Sajda, Wolf E.

(57) **Abstract**

A viewer method and a viewer device capable of more rapidly reproducing desired screen data are provided. An input of character string is accepted in an input accepting unit (213), a title name saved in a screen data saving section (205) is searched based on the input character string, and an instruction is made to a reproduction unit (211) to jump to and reproduce arbitrary screen data based on the search result. Therefore, the desired screen data can be more rapidly reproduced by inputting a character string corresponding to the desired screen data.

## Description

### BACKGROUND OF THE INVENTION

### Field of the Invention

The present invention relates to a viewer method and a viewer device for reproducing screen data sequentially retrieved from a screen displayed on a display part.

### Description of the Related Art

A photo print processing system in which a photo processing device for creating a photo print and a controller are connected with a network is conventionally known. In such a system, image data received at a storefront receiving terminal or at a network receiving terminal is saved in a large-capacity storage device in units of orders. Image data read from a developed negative film by a scanner is similarly saved in the large-capacity storage device in units of orders. The image data saved in units of orders are managed by the controller. The controller transmits the image data to the photo processing device in units of orders according to a print processing order based on the order the orders are received, a handover due date to customers and the like.
The controller can also perform various correction processes on the image data. The various correction processes include special corrections such as correction of color, correction of concentration, correction of red-eye, and correction of backlight. The photo processing device processes the image data in units of orders transmitted from the controller, and creates a photo print. The controller may be configured by a dedicated device, or may be configured by a universal personal computer.

In a photo print processing system configured as indicated above, a method of acquiring an operation history in the controller through methods such as screen capturing is proposed for purposes of verifying the operation history of the operator afterward, verifying the cause of occurrence of error, for maintenance, and the like. The currently known screen capture software has a configuration of capturing all screen data displayed on a monitor.

Japanese Unexamined Patent Publication JP-A-2003-177 847 discloses a data processing device for acquiring the operation history. The device of Japanese Unexamined Patent Publication JP-A-2003-177 847 includes an operation history receiving part for receiving the operation history using input parts such as a mouse and a keyboard with respect to various software such as basic software for managing the basic functions of the computer and application software of word processing software and a WEB browser, and the like; an operation tendency data processing part for performing a predetermined process to find out the operation tendency of a user on the software based on the operation history received by the operation history receiving part; and an operation tendency data output part for outputting the operation tendency data indicating the operation tendency of the user obtained through the predetermined process of the operation tendency data processing part.
In the case of such a device, the operation history using the input parts such as the mouse and the keyboard are acquired, and the operation history by the screen data displayed on the monitor are not acquired.

### SUMMARY OF THE INVENTION

As one example of a method of reproducing screen data retrieved by a screen capture software, a method of sequentially reproducing each screen data by a constant time according to the retrieved order is considered. However, when reproducing the screen data for the purpose of verifying the cause of occurrence of an error, each screen data sequentially reproduced needs to be checked one at a time although only the screen data in time of error occurrence is desired to be checked. Thus, the desired screen data cannot rapidly be reproduced.

In view of the above situation, it is an object of the present invention to provide a viewer method and a viewer device capable of more rapidly reproducing desired screen data.

A viewer method according to a first aspect of the present invention relates to a viewer method for reproducing screen data sequentially retrieved from a screen displayed on a display part, wherein a software program is used for causing a computer to execute the following steps: a reproducing step of sequentially reproducing screen data; a saving step of saving a title name of the screen data in correspondence to each retrieved screen data; an input accepting step of accepting input of a character string; a search step of searching for the title name based on the input character string; and a jump processing step of instructing to jump to and reproduce arbitrary screen data based on the search result.

According to such a configuration, a title name corresponding to the screen data is searched based on the input character string, and a jump is made to arbitrary screen data based on the search result and the relevant screen data is reproduced. Therefore, the desired screen data can be more rapidly reproduced by inputting a character string corresponding to the desired screen data.

The jump part may include jumping to another screen by skipping the mid-screens instead of continuously reproducing the screens in order.

In the viewer method according to a second aspect of the present invention, in the saving step, the title name is saved in correspondence to time; and in the jump processing step, an instruction is made to jump to and reproduce the arbitrary screen data based on the time corresponding to the searched title.

According to such a configuration, the desired screen data can be easily reproduced by jumping to the time corresponding to the title name searched based on the input character string and reproducing the screen data.

In the viewer method according to a third aspect of the present invention, in the input accepting step, the title name is accepted as the character string based on an input operation of selecting the title name displayed on the display part.

According to such a configuration, the title name displayed on the display part is selected to jump to and reproduce the screen data corresponding to the relevant title name. Therefore, the desired screen data can be easily reproduced compared to a configuration of inputting the character string one character at a time.

A viewer device according to a fourth aspect of the present invention relates to a viewer device for reproducing screen data sequentially retrieved from a screen displayed on a display part, wherein the device comprises: a reproduction unit for sequentially reproducing screen data; a saving unit for saving a title name of the screen data in correspondence to each retrieved screen data; an input accepting unit for accepting input of a character string; a search unit for searching for the title name based on the input character string; and a jump processing unit for instructing the reproduction unit to jump to and reproduce arbitrary screen data based on the search result.

According to such a configuration, a viewer device having effects similar to the viewer method according to the first aspect of the present invention is provided.

In the viewer device according to the fifth aspect of the present invention, the saving unit is adapted to save the title name in correspondence to time; and the jump processing unit is adapted to instruct the reproduction unit to jump to and reproduce the arbitrary screen data based on the time corresponding to the searched title name.

According to such a configuration, a viewer device having effects similar to the viewer method according to the second aspect of the present invention is provided.

In the viewer device according to the sixth aspect of the present invention, the input accepting unit is adapted to accept the title name as the character string based on an input operation of selecting the title name displayed on the display part.

According to such a configuration, a viewer device having effects similar to the viewer method according to the third aspect of the present invention is provided.

### BRIEF DESCRIPTION OF THE DRAWINGS

- Fig. 1: is a view explaining a function configuration of a photo print processing system;
- Fig. 2: shows an operation flowchart of a capture process;
- Figs. 3A and 3B: are views each for explaining an execution screen of a capture software;
- Fig. 4: is a view for explaining a capture condition setup screen;
- Fig. 5: is a view for explaining an execution screen of the capture software;
- Fig. 6: is a view for explaining captured screen data;
- Fig. 7: is a view for explaining an execution screen of the capture software;
- Fig. 8: is a view for explaining an execution screen of viewer software;
- Fig. 9: is a view for explaining the execution screen of the viewer software;
- Fig. 10: is a view for explaining an execution screen of the viewer software;
- Fig. 11: is a view for explaining a capture method;
- Fig. 12: is a view showing in further detail the function blocks of the processing function of the viewer software program according to the first embodiment;
- Fig. 13: is a view for explaining one example of a search method;
- Fig. 14: is a flowchart for explaining one example of the search method; and
- Fig. 15: is a view showing in more detail the function blocks on the processing function of the viewer software program according to the second embodiment.

### DETAILED DESCRIPTION OF THE PREFERRED EMBODIMENTS

One example of a photo print processing system suitably applied to the present invention will be described using the drawings.

### Overall configuration of system

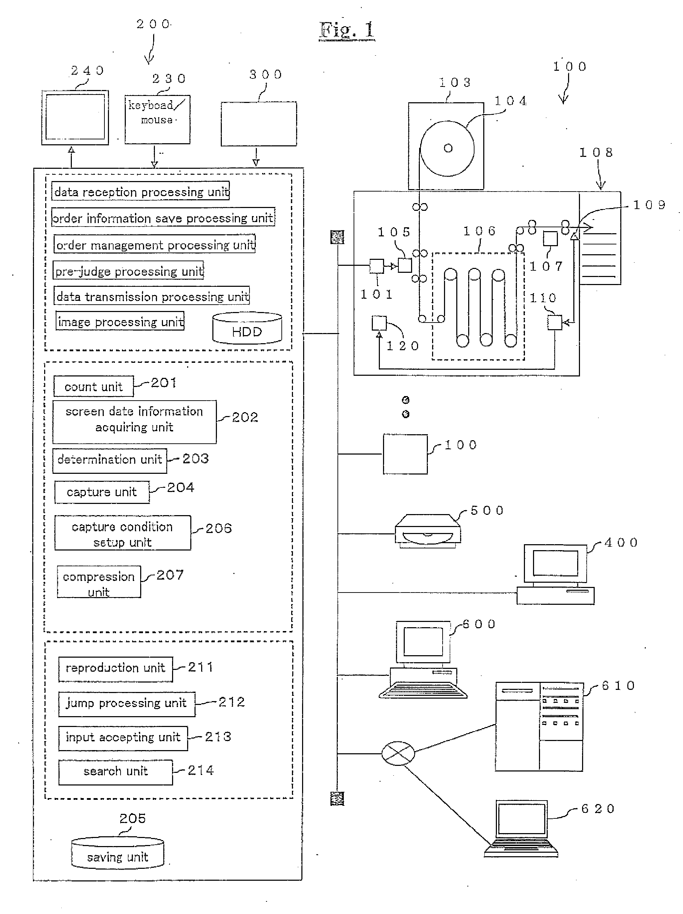

Fig. 1 is a schematic view showing one example of an overall configuration of the photo print processing system. In the present embodiment, one or more photo processing devices 100 are connected to a controller 200 by way of a network such as a LAN. The controller 200 is configured by a universal personal computer, and is installed with an application software program of the photo print processing system.
The application software program is configured by a combination of an image processing program module, an order management program module, a pre-judge program module to be hereinafter described, and other various modules. The controller 200 is installed with various application software such as word processing software, spreadsheet software, accounting software, and WEB browser software.

The controller 200 is connected with a scanner 300 for reading image data from a negative film. A receiving terminal 400, a recording device 500, and a network receiving terminal 600 are connected with the controller 200 by way of the network. The installing number of the receiving terminal 400, the recording device 500, and the network receiving terminal 600 is not limited to one each, and a plurality of them may be installed as necessary. The scanner 300 may have a configuration of being installed in the photo processing device 100.

The photo processing device 100 has a function of creating a photo print based on the image data transmitted from the controller 200. The image data may be image data of a frame image of the developed negative film acquired from the scanner 300, image data transmitted from the receiving terminal 400 etc. through the network, and the like.

The receiving terminal 400 is installed for example at a storefront, and can receive image data stored in a recording media of a digital camera or other recording media. The types of recording media include compact flash (registered trademark), a smart media (registered trademark), a memory stick (registered trademark), a CD-R, a DVD-R, and the like. The receiving terminal 400 is operated mainly by a customer, where the recording media brought by the customer is inserted to select the image data to create the photo print, or set the number of prints and the like. The recording device 500 has a function of writing image data, order data and the like transmitted from the controller 200 in the recording media.

The network receiving terminal 600 is configured by a personal computer, and has a function of receiving print order online through the Internet. The reception of such a print order is made through a server 610 installed on the Internet. In other words, the image data related to the print order is uploaded from a personal computer 620 of the customer to the server 610, and downloaded to the network receiving terminal 600 at an appropriate timing to be used in the print process. Such a system of receiving the print order online is known.

### Function block configuration of photo print processing system

Main functions of the controller 200 will be first described below. The controller 200 is installed with an application software program of the photo print processing system (hereinafter sometimes referred to as photo print processing system program) used in the photo print processing system.

As shown in Fig. 1, the photo print processing system program mainly has a function of causing a computer to execute a data reception processing step (data reception processing unit) of receiving order information including image data and order data related to a photo print order from the scanner 300, the receiving terminal 400, the recording device 500, the network receiving terminal 600 and the like; an order information save processing step (order information save processing unit) of saving the received order information in a storage medium (HDD); an order management processing step (order management processing unit) of performing management process such as adding, changing, deleting, order ordering and the like the order information; a pre-judge processing step (pre-judge processing unit) of pre-judging the image data in the order information; an image processing step (image processing unit) of image processing the image data and creating print creating image data based on pre-judge correction data created in the pre-judge processing step; and a data transmission step (data transmission processing unit) of transmitting the print creating image data to the photo processing device side in units of order according to the print processing order.
The photo print processing system program also has a program function such as a processing step of inquiring an operational status of the photo processing device, a processing step of receiving the operational status of the photo processing device and displaying the same on the screen, and a step of setup processing various set values of the photo processing device. The photo print processing system program operates in cooperation with hardware sources such as a CPU and a memory of an installed personal computer, and exhibits functions thereof.

In another embodiment, the image processing step is not carried out in the controller 200, and the pre-judge correction data created in the pre-judge processing step and the image data are transmitted to the photo processing device side, and the image processing is performed in an image processing substrate configured by a dedicated circuit incorporated in the photo processing device.
The pre-judge processing step is not essential to the image data of all orders, and a configuration without the pre-judge processing may be used. The image data received from the scanner 300 may be after being subjected to the pre-judge processing.

In the present embodiment, the pre-judge processing determines whether or not a photo print of an appropriate image quality is created before creating the photo print based on the image data, and provides a function for an operator to make determination on the image data.

The pre-judge processing specifically provides a function of inputting correction data for correcting color and concentration, where the input of the relevant correction data is set as necessary. The setting of other correction data includes setting of special correction such as red-eye correction and backlight correction.

The setting of the number of prints is set to one in default with respect to the image data acquired from the scanner 300, but may be changed by the input operation of the operator.

The image data of the order information may be configured by one frame image data, or may be configured by a plurality of frame image data. The order data may include information of order ID, customer identification information, number of prints for every frame image, print size for every frame image, and the like.

The controller 200 includes an input operation unit 230 for inputting various settings, operation instruction, and the like, and a monitor 240 for displaying various settings, operation instruction, and the like. The input operation unit 230 is configured by a keyboard, a mouse, and the like. The details of the capture software program of the first embodiment will be hereinafter described, and the configurations of the scanner 300 and the photo processing device 100 will be described below.

The scanner 300 has a function of scanning the frame image formed on the developed negative film and acquiring digital image data. The read image data is transmitted to the controller 200. There are two types of a reading method, pre-scanning and main scanning, where pre-scanning reads the entire negative film once at low resolution (pre-judge resolution), and the main scanning is performed after the pre-judge processing based on the pre-scanned image data and reads at high resolution (photo resolution). In this case, the scanner 300 is connected with a pre-judge processing part providing the pre-judge processing function.

The photo processing device 100 includes a reception unit 101 for receiving the print creating image data from the controller 200, an exposure unit 105 for exposing the received print creating image data onto a printing paper 104 fed out from a magazine 103, a development unit 106 for development processing the exposed printing paper 104, a drying unit 107 for drying the developed printing paper 104, and a sort discharge unit 108 for discharging the dried printing paper 104 while sorting. A main control unit 120 for controlling the overall operation of the photo processing device 100 is also arranged.

The magazine 103 accommodates the printing paper 104 or a photosensitive material in a roll form. Two magazines 103 are installed, and printing papers of different widths can be set in advance. The printing paper 104 of long length pulled out from the magazine 103 is cut with a cutting part such as a cutter to the set print size.

The exposure unit 105 has an exposure engine, receives the print creating image data transmitted from an expansion memory of an image processing substrate 220, and prints and exposes the image on an emulsion surface of the printing paper based on the print creating image data. The exposure engine is not limited to a specific method, and may be a laser engine, a CRT engine, and a PLZT engine.

The development unit 106 performs developing process of the printing paper 104 on which the image is printed and exposed, and the drying unit 107 performs drying process of the developed printing paper 104. In the sort discharge unit 108, the finished photo print is discharged to the outside of the device main body, and is accumulated in units of order by a predetermined accumulating device.

A printing paper sensor 109 detects the printing paper 104 discharged from the sort discharge unit 108, and detects whether or not the photo prints for a certain order are all discharged. A sensor control unit 110 performs drive control of the printing paper sensor 109, and receives and analyzes the signal from the printing paper sensor 109.
When it is detected by the sensor control unit 110 that the photo prints for a certain order are all discharged, the main control unit 120 notifies this to the controller 200, sets the order information on the relevant order to the processed management state, and deletes the order information from the storage medium. The photo processing device 100 is not limited to the above configuration, and may adopt various configurations such as an ink-jet printer and a thermal printer (sublimation printer).

### Capture software program

The functions of the capture software program installed in the controller 200 will be described below. The program can be recorded in a storage medium and provided as a storage medium, or may be provided through a communication line (provided by download). When provided through the communication line, only one part of the function may be provided and another part may remain in the server device.

Fig. 1 shows a function block diagram for explaining the processing function of the capture software program.

Specifically, a count unit 201 for counting a predetermined period, a screen data information acquiring unit 202 for acquiring information of active screen data in the screen data displayed on the screen when the predetermined period is reached, a determination unit 203 for determining whether or not the active screen data is from the application software to be captured based on the acquired information of the screen data, a capture unit 204 for capturing the active screen data when determined that the active screen data is from the application software to be captured by the determination unit 203, and a saving unit 205 for saving the screen data captured in the capture unit 204 are arranged. The saving unit 205 is, for example, a large capacity storage medium.

The captured screen data is preferably subjected to compression process and then saved. The known compression algorithm, for example, a run-length compression method, a PIC compression method, JPEG compression, PNG compression, GIF compression, and the like can be applied. In the relevant case, the capture software program has a compression processing function (compression unit 207), and has a configuration of causing the computer to execute the compression processing step.

A capture condition setup unit 206 for setting the capture condition is also arranged. The capture condition setup unit 206 can set various types of capture condition, where the capture condition includes setup of a capture pattern, specification of a folder to output the capture data, the number of files to output, specification of an output size of one file (capacity for saving the capture data is determined by the number of files and the file size), a timing of capture processing, and the like. Details thereof will be described hereinafter

### Capture method

The processing method of the capture unit 204 will be described below. As a first method, a method of directly acquiring the screen data in the active window screen is known. This is a method of cutting out and acquiring only the screen data of the active window screen from the desktop screen displayed on the monitor, and not acquiring other screen data.
In this case, the relative position coordinate of the active window screen with respect to the desktop screen is preferably stored. The position of the captured screen can be accurately reproduced at the time of reproduction by storing the relative position coordinate.

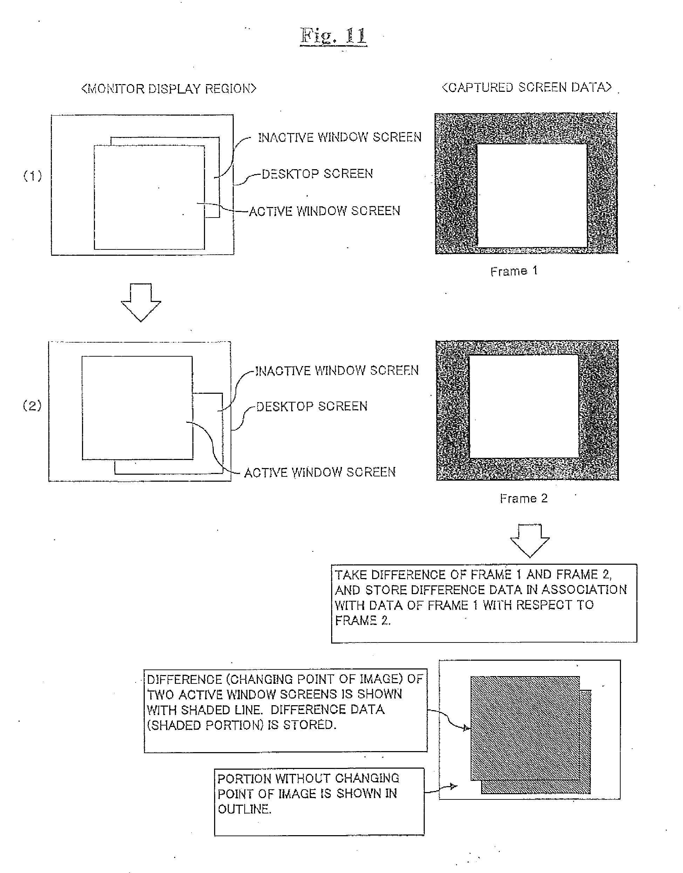

As a second method, a method of retrieving only difference data with the screen data retrieved immediately before is provided. Since only the difference data is retrieved, the amount of data saved in the saving unit 205 can be reduced when change is not found or when change is small in the screen data. In this case, the process of decompressing the difference data at the time of reproduction is required. The method of retrieving the difference data includes the following steps.
(1) In an initial retrieval, the color of the monitor display portion (desktop screen, non-active window screen, icon, task bar, and the like) other than the active window screen is black as shown in Fig. 11, and the entire display region displayed on the monitor is retrieved. The retrieved display region is assumed as frame 1.
(2) In a second and subsequent retrievals, the color of the monitor display portion other than the active window screen is black as shown in Fig. 11, and the entire display region displayed on the monitor is retrieved. The retrieved display region is assumed as frame 2. The difference between the screen data (frame n) retrieved this time and the screen data (frame (n-1)) retrieved immediately before is taken, and only the difference data is stored in association with the screen data retrieved immediately before.
   The difference data having the screen data retrieved immediately before as a reference can be accumulated by repeating the above processes. The difference is the changing point of the image. As shown in Fig. 11, when the difference between frame 1 and frame 2 is taken, the shaded portion is the changing point of the image, and the outline portion is the portion without change of image. The difference data or the shaded portion is stored in association with the screen data immediately before.

### Operation flowchart

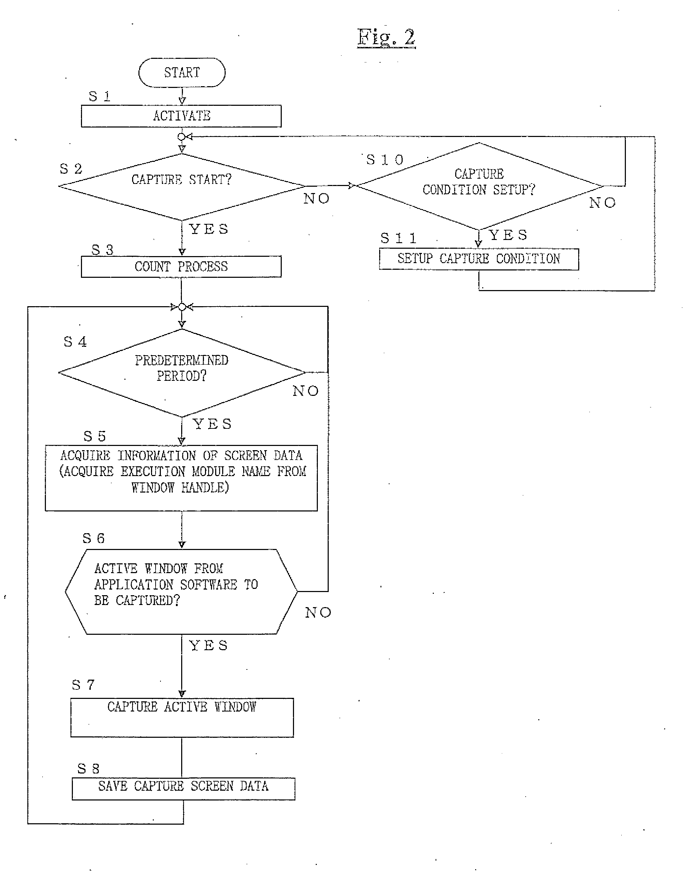

The processing flow of the capture software program will now be described below using Fig. 2. The controller 200 is configured by a personal computer, where the personal computer is an environment operating in the window system (e.g., Microsoft Windows (registered trademark) 2000, XP, VISTA (registered trademark)) manufactured by Microsoft Co. (registered trademark). Other window systems such as Mac OS, X Window System may also be used.

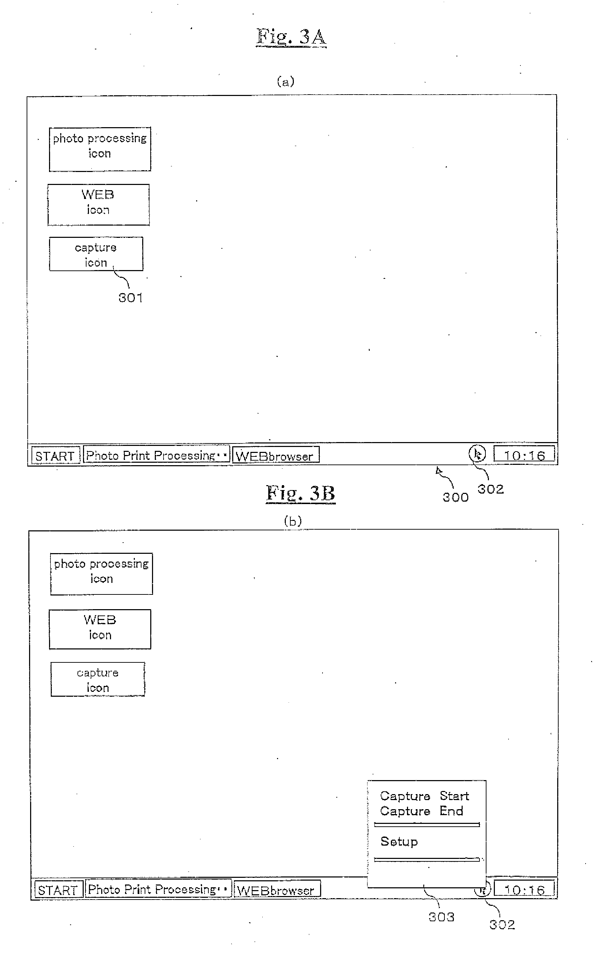

When the controller 200 is operated on the OS, a desktop screen 300 is displayed, as shown in Fig. 3A. An activation file icon of various application software is displayed on the desktop screen 300. An activation file icon 301 of the capture software program is selected and executed (S1). When executed, an icon 302 is displayed on a task bar as shown in Fig. 3A. The capture state can be distinguished by the color of the icon.
For instance, the icon background color of light blue means pause, red means capturing, and orange means occurrence of capture error. The occurrence of capture error includes a case where the file cannot be output to the storage medium (e.g., hard disc) for saving the captured screen data. As an initial setting, the setting may be made such that the capture function is automatically started by the execution of the activation file or may be in the pause state.

After the execution of the activation file (S1), whether or not the capture function is in the ON state is determined (S2), and the process proceeds to step S3 and if in the ON state. If not in the ON state, the capture function is in the pause state. In order to have the capture function in the ON state, the icon 302 of the task bar shown in Fig. 3A is clicked to display a menu 303 as shown in Fig. 3B, and "capture start" is selected from the menu 303 to start the capture function. In addition to "capture start", the menu 303 is configured to enable the selection of "capture end" (function of stopping capture), "setup" (function of setting up capture condition), and "software close" (function of closing capture software program, executed only after the capture end).

In the pause state, whether or not "setup" is selected is determined (S10). If "setup" is selected, the setup of the capture condition is performed in step S 11. The "setup" is a function of the capture condition setup unit 206 that enables the setup of the conditions when not in capturing.
The capture condition may have recommended conditions set in advance, but may be configured to be appropriately set depending on a convenience of a photo studio installed with the photo print processing system, the processing ability and the hard disc capacity of the personal computer used as the controller 200, and the like, and is configured to be customized to various user conditions.

### Capture condition setup

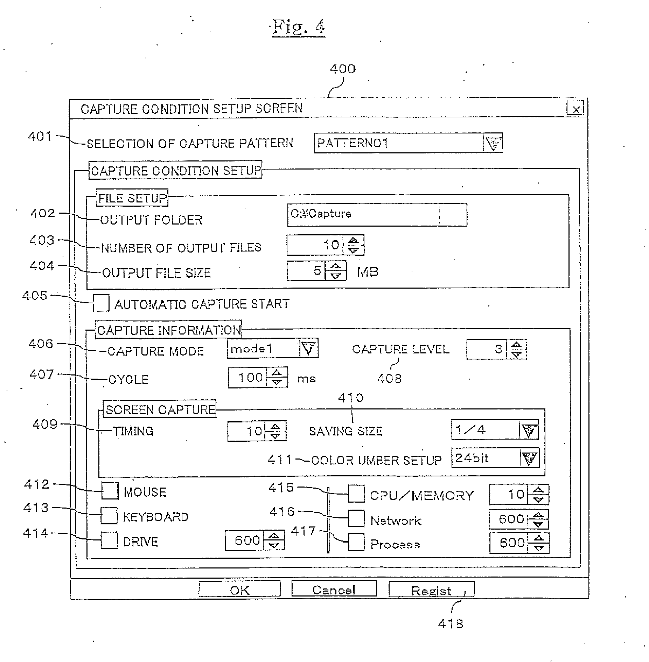

The setup of the capture condition will be described below. Fig. 4 shows one example of a capture condition setup screen 400. A "selection of capture pattern 401" is a box for setting a pattern to use. The pattern already set is displayed in a combo box. When setting a new pattern, a new name is input and saved. The saving is confirmed by pressing "Regist 418".

In "output folder 402" of the file setup field, a folder to save the captured screen data (hereinafter sometimes referred to as captured screen data) is specified. A folder list is displayed and made selectable with a button on a right side of the box. In "number of output files 403", the number of files to output is set. In "output file size 404", the output size of one file is specified.
When the specified size is exceeded, the file is switched to the next file and output. The value obtained by multiplying the "number of output files 403" and the "output file size 404" is the capacity the captured screen data is saved. Therefore, the setup corresponding to the capacity of the large capacity storage medium (e.g., hard disc) of the saving unit 205 can be made.

The setting can be made such that the capture process automatically starts when the capture software program is activated by checking a check box of "automatic capture start 405". In "capture mode 406" of the capture information field, various modes can be set.

A "cycle 407" of the capture information field is the setting for controlling the cycle timing of the capture process. Whether or not the process is necessary is determined for every numerical value specified thereat. In "capture level 408", the number of parent screen of the active window to capture is set.

In "timing 409" of the screen capture field, a sampling count value of the capture process is set. The screen data is captured at a time timing of the value obtained by multiplying the numerical value set in the "cycle 407" by the sampling count value set here. In the setting of Fig. 4, the screen data is captured every one second of the value obtained by multiplying 100 ms by 10. The sampling of the screen data may be performed other than at such a timing, and may be acquired by pressing the mouse button, or by pressing the keyboard.

In "saving size 410" of the screen capture field, the size for saving when saving the acquired screen data is set. If a large screen is saved as is, the image in reproduction is satisfactory, but the period of being held as a log becomes shorter as the amount of saving data increases. The screen data is compressed according to the specified saving size. In "color number setup 411 ", the number of colors for saving when saving the acquired screen data is set. The original color number is held with the larger the numerical value. The amount of saving data increases with the larger the numerical value.

If the check box of "mouse 412" is checked, a mouse operation log is saved. The mouse operation log is associated with the acquired screen data. If the check box of "keyboard 413" is checked, a keyboard operation log is saved. The keyboard operation log is associated with the acquired screen data. If the check box of "drive 414" is checked, a drive change log is saved. The drive change log is associated with the acquired screen data.

If the check box of "CPU/MEMORY 415" is checked, the usage log of the CPU and the usage log of the memory are saved. Sampling is performed at the time timing of the value obtained by multiplying the numerical value (100 ms) set in the "cycle 407" by the numerical value (10) set here. If the check box of "Network 416" is checked, the network state log is saved.
Sampling is performed at the time of the timing value obtained by multiplying the numerical value (100 ms) set in the "cycle 407" by the numerical value (600) set here. If the check box of "Process 417" is checked, the process state log is saved. Sampling is performed at the time of the timing value obtained by multiplying the numerical value (100 ms) set in the "cycle 407" by the numerical value (600) set here.

The capture process will now be described. When the capture function is started, a predetermined period is counted using a timer function in the personal computer in step S3 (S3, count step). The period of capture timing is set by the capture condition setup.

When the predetermined period is reached (S4), the information of the active screen data is acquired (S5, screen data information acquire processing step). For instance, a window handle of the active screen is acquired, The execution module name is acquired from the acquired window handle. This is because the window handle and the execution module name are associated in the CPU. The title name of the relevant screen is included in the window handle, so that the title name is read out from the acquired window handle and saved in the saving unit 205 in correspondence to each screen data. This title name is the search target in the scene jump to be hereinafter described.

Whether or not the information (herein, execution module name) of the acquired screen data is from the application software to be captured is determined (S6, determination processing step). The application software to be captured is stored in the memory and the like in advance, and is various execution modules of the photo print processing system program herein.

If it is determined that the information of the acquired screen data is from the application software to be captured, the active screen data is captured (S7, capture processing step). The above-described method can be applied for the specific method of capture. If it is determined as not from the application software to be captured in step S6, the capture process is not performed, and the process returns to step S4. That is, the screen data is not retrieved at this timing, and the captured screen data does not exist.

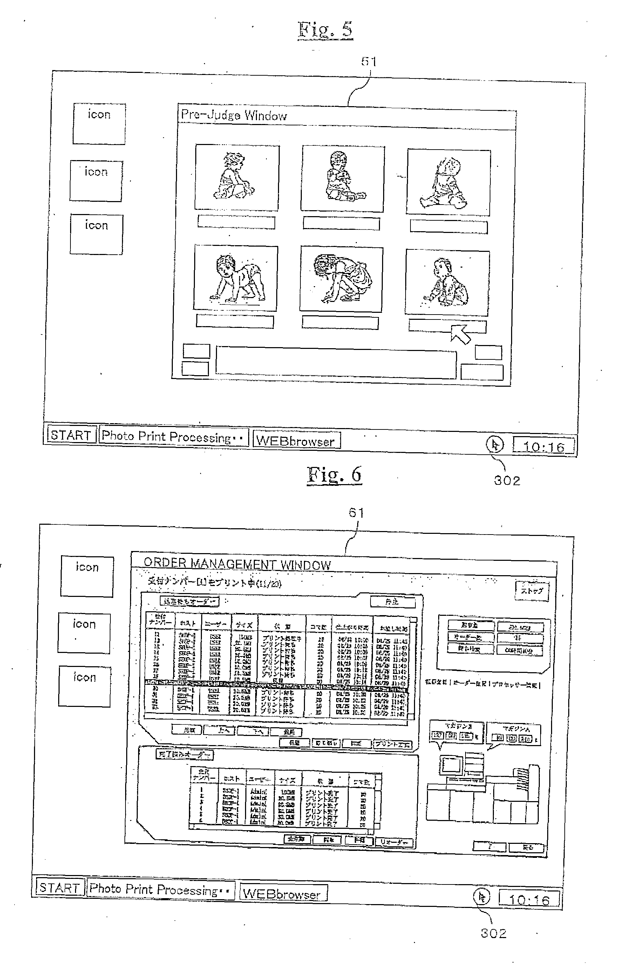

When referring to "screen is active", it means that the input operation is possible only to the relevant screen. Fig. 5 shows one example of when the screen of the photo print processing system program is active. A window screen at the middle of the screen is a screen example (example of pre-judge screen) of the photo print processing system program, and shows that it is active. The screen of other application software is inactive, and is merely displayed on the task bar at the lower region of the screen or hidden in the background of the pre-judge screen.

Fig. 5 shows an active pre-judge screen 51. When retrieving the pre-judge screen 51, screen data other than the pre-judge screen in the desktop screen is retrieved as black, the difference (changing point of image) with the frame immediately before is taken, and the difference data is associated with the screen data immediately before.
Then, as shown in Fig. 6, similarly when retrieving an active order management screen 61, other screen data other than the order management screen in the desktop screen is retrieved as black, the difference with the frame immediately before (desktop screen including pre-judge screen 51 of Fig. 5) is taken, and the difference data is associated with the screen data immediately before. Thus, only the data on the image region different from the image region immediately before is captured.

The captured screen data is compressed by the compression unit 207, and saved in the saving unit 205 (S8, save processing step). The compression processing is not essential, but is preferred from the standpoint of ensuring the capacity of the storage medium.

The storage medium of the saving unit 205 is preferably a hard disc capable of storing large capacity data. Preferably, the amount of saving data that can be saved in the storage medium is set in advance, where old screen data is deleted when the amount of data of the saved screen data reaches the amount of saving data, so that the amount of saving data of the storage medium is maintained at not more than a certain amount and drawbacks such as the captured screen data not being saved do not occur. If the amount of captured screen data reaches the amount of saving data, the captured screen data saved in the storage medium is transferred to a medium (CD-ROM, MO, etc.) to ensure the storage region of the storage medium.

The capture process displays a menu from the icon of the task bar, and is stopped by selecting "pause", as described above. The capture process start time and the end time are set in advance, where the capture process is automatically started from the start time and automatically paused when reaching the end time. The capture process end period may be set, so that the capture process is automatically paused when a certain period has elapsed from the capture start time.

According to the above embodiment, if the application software to be captured is active and the relevant screen is active, the screen data thereof can be captured and the screen data of other application software cannot be captured. Thus, even if personal information and trade secret are contained in the screen data of other application software, such information cannot be captured, and thus legal problems do not arise, and operation of the operation history acquisition using the screen capture becomes possible.

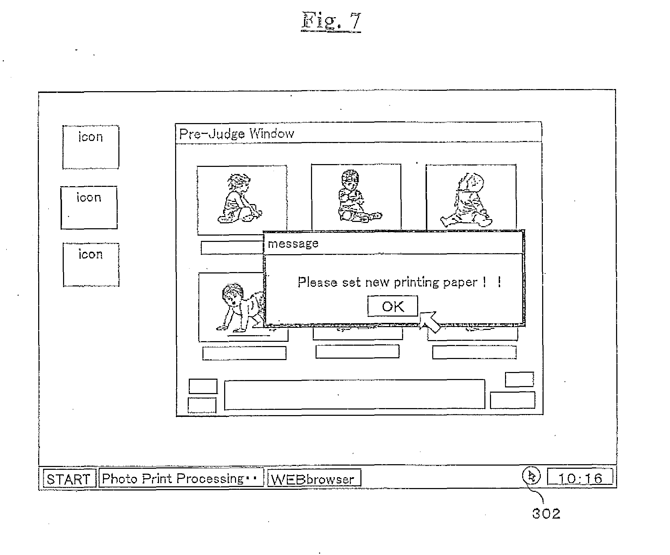

As shown in Fig. 7, two screens may be configured so that one, the child, is always in the foreground relative to the other, the parent. Such a configuration is also called a parent-child relationship. When capturing the screen data set of such a configuration, for example, the pre-judge screen and the message screen, both screen data may be captured. If it is judged that the message screen is active, the pre-judge screen, which is the parent screen, is simultaneously captured. The setup of configuring the child screen to remain in the foreground relative to the parent screen can be appropriately set, and is not limited to the pre-judge screen and the message screen.
Thus, the setup includes appropriately setting the order management screen and the message screen, the order management screen and the error message screen, various operation screens and the message screen, various operation screens and the error message screen, and the like.

### Reproduction process of the capture screen data

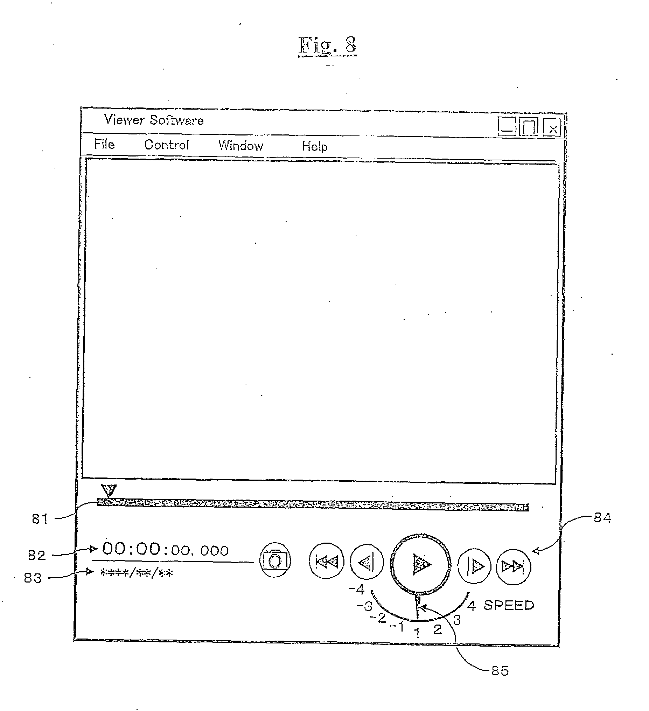

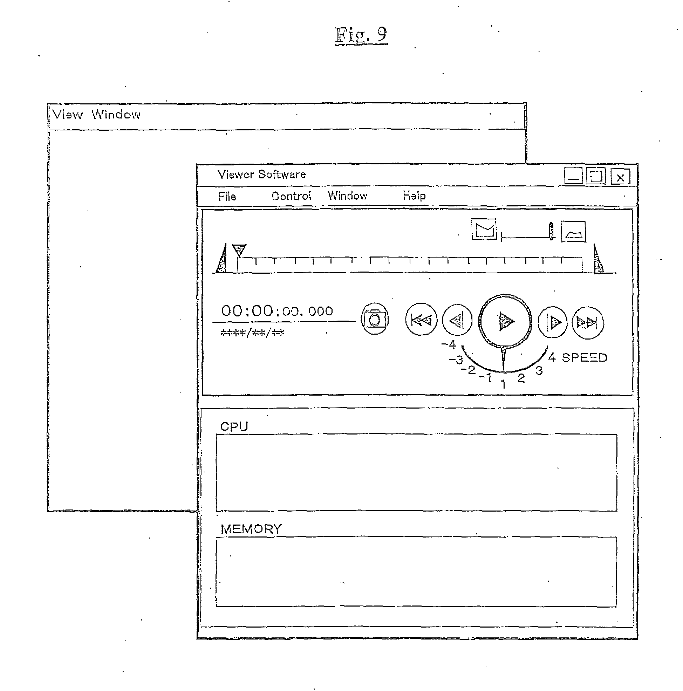

The screen data captured in the capture software program can be displayed with viewer software program. When the viewer software program is run, a window of a simple display mode shown in Fig. 8 is displayed. A window of a detailed display mode shown in Fig. 9 can be displayed by selecting a "switch display mode" from the item "window" of the menu. In the detailed display mode, two screens of View Window displaying the screen data and the operation of reproducing function and various log display screen window can be displayed.

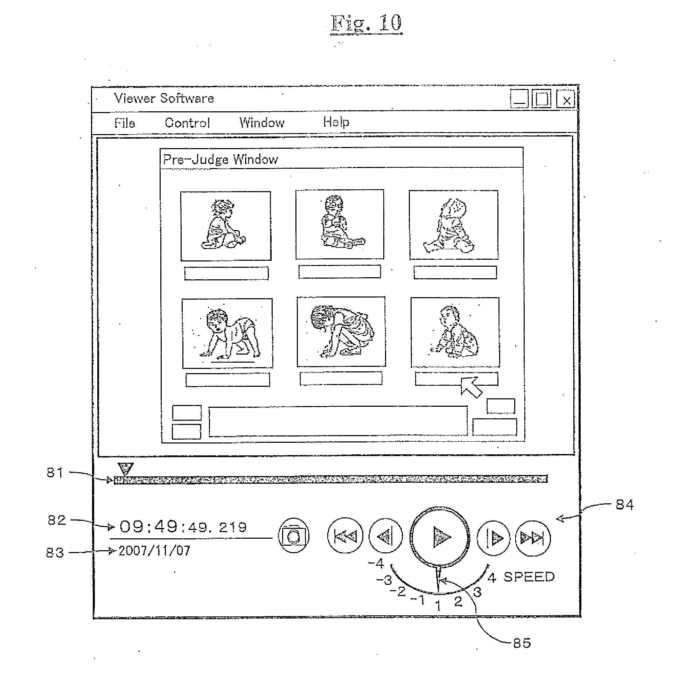

The reproduction method will now be described. First, Fig. 10 shows an example of screen data reproduced in the simple display mode. The item "file" of the menu of Fig. 8 is selected and the relevant menu is displayed. "Open file" in the menu is selected, and the file to reproduce is selected from a list of files in which the image data of the captured screen is saved. When the file is selected, the relevant file is read into the main memory from the storage medium, and reproduction is started.
The screen at the middle of the window of Fig. 10 shows the reproduced capture screen. A cursor of the mouse is also captured. If the captured screen data is compressed, a decompression process is performed and reproduction is performed. If stored as the difference data, a process of decompressing the difference data is performed.

In Fig. 10, a bar 81 at the lower part of the display window and an inverted triangle mark above the bar 81 show which position of the file being reproduced is being displayed. Below the bar 81 at the lower part of the window, a time 82 (captured local time of computer) at which the currently displayed screen data is captured, and a date 83 are displayed. On the right side of the time 82, a play/pause button (function button of switching to play or pause by pushing the button) or a button 84 for moving a predetermined amount from the current position, a play speed setting bar 85, and the like are displayed.

### Viewer software program

A function of the viewer software program installed in the controller 200 will now be described below. This program is recorded on a storage medium and can be provided as a storage medium, or may be provided (provided download) through a communication line. When provided via the communication line, only a portion of the function may be provided, and another portion may be remained in the server device.

### First Embodiment

As a first embodiment, a configuration of reproducing, by the function of the viewer software program according to the first embodiment, the screen data sequentially retrieved through a method (first method) of acquiring image data in an active window screen as it is by the function of the capture software program will be described.
Fig. 1 shows a function block diagram on the processing function of the viewer software program. Specifically, a reproduction unit 211 for sequentially reproducing screen data, a jump processing unit 212 for executing scene jump by instructing the reproduction unit 211 to jump to and reproduce the arbitrary screen data, an input accepting unit 213 for accepting the input of a character string, and a search unit 214 for searching for the title name corresponded to each screen data based on the input character string are arranged.
The scene jump part jumping to another screen by skipping the mid-screens instead of continuously reproducing the screens in order. The function of scene jump is a function of skipping and displaying the sequentially retrieved screen data, and can also be called a cue function.

### Scene jump method

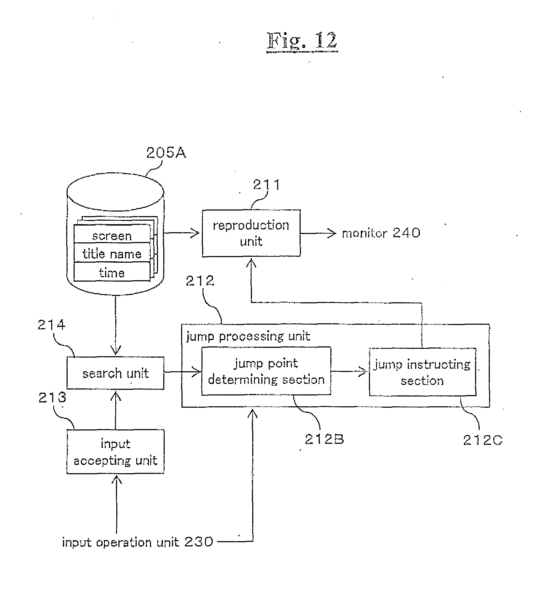

Fig. 12 is a view showing in further detail the function blocks of the processing function of the viewer software program according to the first embodiment. In the example, a case where the screen data is sequentially retrieved from the screen displayed on a monitor 240 through a method (first method) of saving the image data in the active window screen, as is, is shown. Each screen data retrieved in this manner is saved in correspondence with the title name and the retrieved time of the screen data in a screen data saving section 205A configuring one part of the saving unit 205.

The time may be an absolute time or may be a relative time. For instance, a creation time of a file created in time of first retrieval of the screen data is saved as an absolute time, and an elapsed time (relative time) with respect to the absolute time is saved in correspondence to each screen data retrieved thereafter. Even in such a configuration, an absolute time corresponding to each screen data can be specified, and each screen data can be reproduced while displaying the absolute time by performing a process of adding the relative time to the absolute time.
When the absolute time is saved in correspondence to each screen data, the file size becomes large, but the file size can be reduced and the amount of data to save in the screen data saving section 205A can be reduced by saving the relative time of each screen data at an offset value from the absolute time or the creation time (start time) of the file.

The reproduction unit 211 reproduces the screen data by switching every constant time and sequentially displaying each screen data saved in the screen data saving section 205A on the window of the monitor 240 according to the corresponded time. The constant time can be changed by the operation of a play speed setting bar 85.

The input accepting unit 213 provides the character string input using the input operation unit 230 to the search unit 214. The method of inputting the character string using the input operation unit 230 includes a method of directly inputting characters by operating a keyboard serving as one example of the input operation unit 230, a method of selecting the title name displayed on the monitor 240 in advance by operating a mouse serving as one example of the input operation unit 230, and the like.

The search unit 214 compares the character string input from the input accepting unit 213 with the title name of each screen data saved in the screen data saving section 205A to search for the screen data corresponding to the input character string. A search method by the search unit 214 includes partial match search and perfect match search.
In the partial match search, when the character string of all or one part of the title name saved in correspondence to each screen data matches the input character string, the relevant title name is output as the search result. In the perfect match search, only when all the character string of the title name saved in correspondence to each screen data matches the input character string, the relevant title name is output as the search result.

The jump processing unit 212 includes a jump point determining section 212B and a jump instructing section 212C, and starts the scene jump based on the operation of the input operation unit 230. The jump point determining section 212B determines the screen data (jump point) reproduced after the scene jump based on the search result input from the search unit 214. More specifically, when one title name is input as the search result from the search unit 214, the screen data saved in the screen data saving section 205A in correspondence to the title name is determined as the jump point.
If a plurality of title names is input as the search result from the search unit 214, the screen data corresponding with the nearest time before or after the screen data reproduced at the relevant time point of each screen data saved in the screen data saving section 205A in correspondence to such title names is determined as the jump point. The remaining screen data corresponding to the search result can be sequentially determined as the jump point by the operation of the input operation unit 230.

The jump instructing section 212C instructs the reproduction unit 211 to reproduce the screen data from the jump point determined by the jump point determining section 212B. That is, the jump instructing section 212C reads out the time corresponding to the title name of the screen data determined as the jump point by the jump point determining section 212B from the screen data saving section 205A, and instructs the reproduction unit 211 to reproduce from the screen data corresponding to the relevant time.
When the reproduction unit 211 reproduces the screen data based on the instruction from the jump instructing section 212C, jump is made to the screen data corresponding to the jump point to reproduce the relevant screen data without reproducing one or more screens.

Therefore, the desired screen data can be easily reproduced by jumping to the time corresponding to the title name searched based on the input character string and reproducing the screen data. However, not limited to the configuration in which the time is input from the jump instructing section 212C to the reproduction unit 211, a configuration in which information other than time is input to the reproduction unit 211 as information for identifying the screen data corresponding to the jump point, and the reproduction unit 211 reads out the screen data from the screen data saving section 205A based on such information and reproduces the screen data may be adopted.

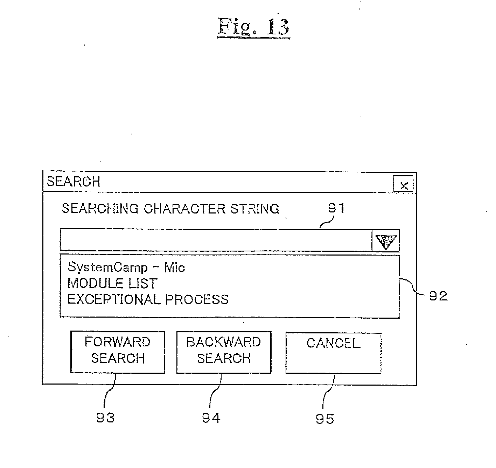

Fig. 13 is a view for explaining one example of a search method. In Fig. 13, one example of a search screen displayed on the monitor 240 for inputting the character string using the input operation unit 230 is shown. The relevant search screen can be displayed on the monitor 240 by the operation of the input operation unit 230.
The search screen includes a free keyword region 91 for directly inputting characters, a list display region 92 for displaying a list of title names corresponding to each screen data in a combo box, a forward search key 93 for determining the screen data corresponded with the nearest time before the screen data reproduced at the relevant time point as the jump point, a backward search key 94 for determining the screen data corresponded with the nearest time after the screen data reproduced at the relevant time as the jump point, and a cancel key 95 for interrupting the execution of the search.

The characters can be directly input by operating the keyboard serving as one example of the input operation unit 230 by selecting the free keyword region 91. Furthermore, one of the title names displayed in a list in the list display region 92 can be selected by operating the mouse serving as one example of the input operation unit 230.
After inputting the character string using the free keyword region 91 or the list display region 92, the forward search key 93 or the backward search key 94 is selected so that the character input to the free keyword region 91 or the title name selected from the list display region 92 is accepted as the character string, and the jump point is determined.
When selecting the title name from the list display region 92, the desired screen data can be easily reproduced compared to when inputting the character string one character at a time to the free keyword region 91.

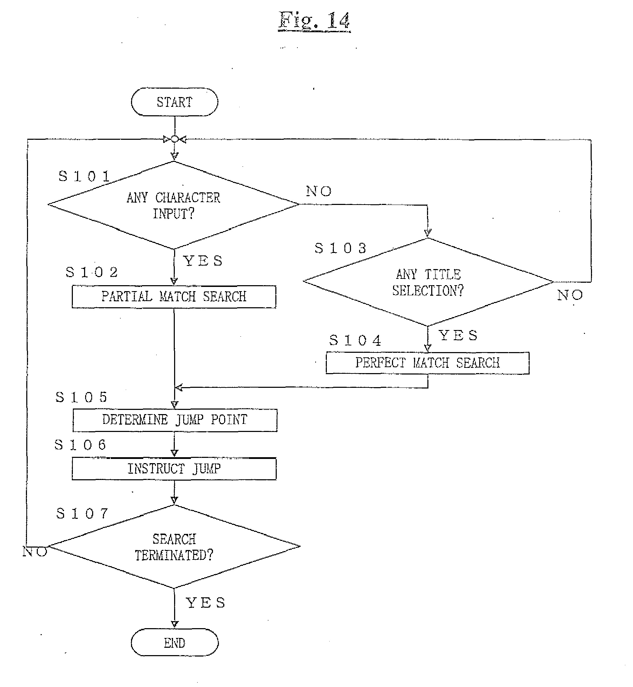

Fig. 14 is a flowchart for explaining one example of the search method. In the search screen shown in Fig. 13, when the character is directly input to the free keyword region 91 and the forward search key 93 or the backward search key 94 is selected thereafter (YES in step S101), the title name in which all or one part of the character string matches the input character string of the title names saved in correspondence to each screen data in the screen data saving section 205A is output as a search result, so that partial match search is performed (step S102).
When one of the title names list displayed in the list display region 92 is selected (YES in step S 103), the title name in which all the character string matches the input character string of the title names saved in correspondence to each screen data in the screen data saving section 205A is output as a search result, so that perfect match search is performed (step S 104).

Based on the title name searched in this manner, the screen data corresponding with the nearest time before the screen data reproduced at the relevant time point is determined as the jump point when the forward search key 93 is selected, and the screen data corresponding with the nearest time after the screen data reproduced at the relevant time point is determined as the jump point when the backward search key 94 is selected. An instruction is made to the reproduction unit 211 so as to reproduce from the screen data corresponding to the relevant jump point without reproducing the screen data to the determined jump point (step S106).
When the forward search key 93 or the backward search key 94 is again selected, the screen data corresponding with the nearest time before or after the screen data is determined as the jump point from the search result with the screen data after the jump as a reference. The processes of steps S101 to S106 are performed until the search is terminated (until YES in step S107) such as when the cancel key 95 is selected on the search screen of Fig. 13.

In the present embodiment, the title name corresponding to the screen data is searched based on the input character string, and jump can be made to arbitrary screen data and the relevant screen data can be reproduced without reproducing one or more screen data. Therefore, the desired screen data can be more rapidly reproduced by inputting the character string corresponding to the desired screen data.

### Second Embodiment

In the first embodiment, a configuration of reproducing, by the function of the viewer software program according to the first embodiment, screen data sequentially retrieved through a method (first method) of acquiring image data in an active window screen as is by the function of the capture software program has been described.
The second embodiment differs in that a configuration of reproducing, by the function of the viewer software program according to the second embodiment, screen data sequentially retrieved through a method (second method) of saving difference data between screen data by the function of the capture software program is adopted.

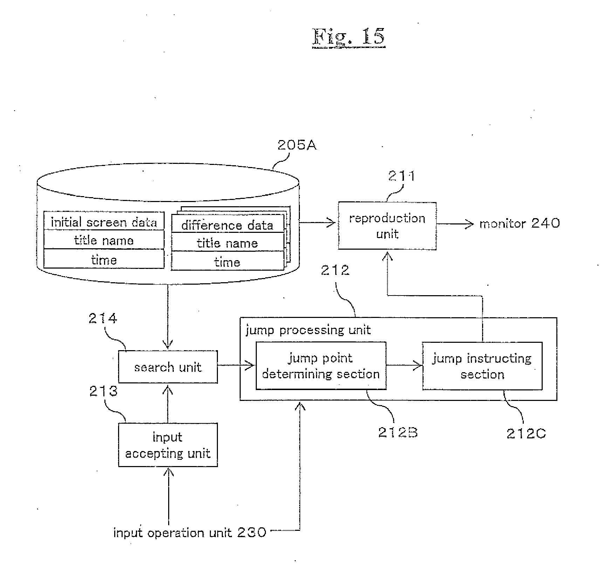

Fig. 15 is a view showing in more detail the function blocks on the processing function of the viewer software program according to the second embodiment. In the second embodiment, the screen data (initial screen data) is saved in the first retrieval in the screen data saving section 205A configuring one part of the saving unit 205, and the difference data between the image data (frame n) retrieved for this time and the image data (frame (n-1)) retrieved the previous time is sequentially saved in the second and subsequent retrieval. The initial screen data and the difference data are saved corresponded with the title name and the retrieved time of the respective screen data. The time may be an absolute time or a relative time.

The reproduction unit 211 sequentially decompresses each difference data according to the corresponded time after displaying the initial screen data saved in the screen data saving section 205A on the window of the monitor 240, and sequentially adds each decompressed difference data to the already displayed screen data. Thus, different screen data can be switched every constant time and sequentially displayed, and the screen data can be reproduced.
The constant time can be changed by operating the play speed setting bar 85. The configurations and the functions of the jump processing unit 212, the input accepting unit 213, and the search unit 214 are similar to the first embodiment, and thus detailed description thereof will be omitted.

### Third Embodiment

A viewer software program of the present invention is installed in the controller 200, and is not limited to a mode of being run by the operator on the controller 200. For instance, the activation of the viewer software program can be executed from a computer (portable computer, universal personal computer, work station, server device, and the like) connected with the controller 200 through the network (including Internet connection). The screen data or the difference data saved in the saving unit 205 can be transmitted to the computer through the network.
Instead of transmitting the screen data or the difference data to the computer via the network, the storage medium stored with the screen data or the difference data may be accepted by a delivery service such as a mail or may be directly received at the storefront, and the process by the viewer software program may be performed using the screen data or the difference data read from the storage medium to the computer.

The viewer software program can also be configured as a module configuring the photo print processing system program. In the relevant case, the photo print processing system program is run, and the viewer software program is run from the operation screen. Other components can be realized with components similar to the above.

### Fourth embodiment

### Viewer device

The viewer device of the fourth embodiment includes the reproduction unit for sequentially reproducing screen data, the saving unit for saving the title name of the screen data in correspondence to each retrieved screen data, the input accepting unit for accepting the input of the character string, the search unit for searching for the title name based on the input character string, and the jump processing unit for instructing the reproduction unit to jump to and reproduce the arbitrary screen data based on the search result.
The saving unit may save the title name in correspondence with time, and the jump processing unit may instruct the reproduction unit to jump to and reproduce the arbitrary screen data based on the time corresponding to the searched title name. The input accepting unit may accept the title name as the character string based on the input operation of selecting the displayed title name. The details are as described above.

The viewer device can be incorporated in the personal computer installed with the application software of the photo print processing system as a dedicated circuit substrate board, or can be connected to the personal computer through the network. The viewer device or the dedicated circuit substrate board can have the above configuration configured by a dedicated circuit, configured with cooperative operation of the hardware source such as a CPU and a memory, and various software programs, or configured by firmware.

The screen data reproduced in the viewer device can be retrieved with the capture software program similar to the above, and the viewer device may have the capture software function. The captured screen data is transmitted to the network connected computer, and reproduced using the viewer software on the computer.

In the above described embodiments, a configuration in which the viewer software program is executed in the photo print processing system or the viewer device is arranged in the photo print processing system has been described, but the configuration is not limited thereto, and the present invention is applicable to various systems and devices other than the photo print processing system.

## Claims

1. A viewer method for reproducing screen data sequentially retrieved from a screen displayed on a display part, wherein a software program is used for causing a computer to execute the following steps:
- a reproducing step (211) of sequentially reproducing screen data;
- a saving step (205) of saving a title name of the screen data in correspondence to each retrieved screen data;
- an input accepting step (213) of accepting input of a character string;
- a search step (214) of searching for the title name based on the input character string; and
- a jump processing step (212) of jumping to and reproducing arbitrary screen data based on the search result.

2. The viewer method according to claim 1,
wherein in the saving step (205), the title name is saved in correspondence to time; and
wherein in the jump processing step (212), an instruction is employed to jump to and reproduce the arbitrary screen data based on the time corresponding to the searched title.

3. The viewer method according to claim 1 or 2,
wherein in the input accepting step (213), the title name is accepted as the character string based on an input operation of selecting the title name displayed on the display part.

4. A viewer device for reproducing screen data sequentially retrieved from a screen displayed on a display part, the device comprising:
- a reproduction unit (211) for sequentially reproducing screen data;
- a saving unit (205) for saving a title name of the screen data in correspondence to each retrieved screen data;
- an input accepting unit (213) for accepting input of a character string;
- a search unit (214) for searching for the title name based on the input character string; and
- a jump processing unit (212) for instructing the reproduction unit to jump to and reproduce arbitrary screen data based on the search result.

5. The viewer device according to claim 4,
wherein the saving unit (205) is adapted to save the title name in correspondence to time; and
wherein the jump processing unit (212) is adapted to instruct the reproduction unit to jump to and reproduce the arbitrary screen data based on the time corresponding to the searched title name.

6. The viewer device according to claim 4 or 5,
wherein the input accepting unit (213) is adapted to accept the title name as the character string based on an input operation of selecting the title name displayed on the display part.

7. A recording medium recorded with a viewer software program for reproducing screen data sequentially retrieved from a screen displayed on a display part, the program comprising instructions for:
- sequentially reproducing screen data;
- saving a title name of the screen data in correspondence to each retrieved screen data;
- accepting input of a character string;
- searching for the title name based on the input character string; and
- jumping to and reproducing arbitrary screen data based on the search result.
